# EUROPÄISCHE PATENTSCHRIFT

(11) **EP 1 593 474 B1**
(45) Veröffentlichungstag und Bekanntmachung des Hinweises auf die Patenterteilung: **11.11.2009**
(21) Anmeldenummer: 05450075.6
(22) Anmeldetag: 27.04.2005
(51) Int. Cl.: B29B 9/06, B29C 47/30, B29C 47/86, B01J 2/20

(54) **Anordnung mit einem Granulierkopf eines Extruders**
Device with a granulationhead of an extruder
Dispositif avec une tête de granulation d'une extrudeuse

(30) Priorität: 28.04.2004 AT 7352004
(43) Veröffentlichungstag der Anmeldung: 09.11.2005
(73) Patentinhaber: Hehenberger, Gerhard, 4622 Eggendorf 108 (AT); Remili, Johannes, 4073 Wilhering (AT)
(72) Erfinder: Hehenberger, Gerhard, 4622 Eggendorf 108 (AT); Remili, Johannes, 4073 Wilhering (AT)
(74) Vertreter: Hübscher, Helmut

(56) Entgegenhaltungen:
- DE-A1- 2 349 273
- DE-A1- 3 243 332
- US-A- 3 792 950
- US-A- 4 564 350
- US-A- 4 678 423
- US-A- 4 764 100
- PATENT ABSTRACTS OF JAPAN Bd. 011, Nr. 125 (M-582), 18. April 1987 (1987-04-18) & JP 61 268407 A (JAPAN STEEL WORKS LTD:THE), 27. November 1986 (1986-11-27)

## Beschreibung

Die Erfindung betrifft eine Anordnung mit einem Granulierkopf eines Extruders zum Granulieren von Kunststoffen mit mehreren Durchtrittsöffnungen zum Durchtritt von Kunststoffschmelze und einer an seiner Stirnfläche angeordneten Granulierlochplatte mit Löchern, wobei die Durchtrittsöffnungen in je einem gesonderten, über eine vordere Stirnfläche des Granulierkopfes hinausragenden stutzenförmigen Vorsprung münden, wobei zur berührungsfreien Aufnahme der stutzenförmigen Vorsprünge in den Löchern der Granulierlochplatte unter Ausbildung eines Freiraums der freie Querschnitt der Löcher größer als der Außenumfang der Vorsprünge ist, und jeweils zwischen einer vorderen Stirnfläche des stutzenförmigen Vorsprungs und einem mit der Granulierlochplatte verbundenen Stützelement, vorzugsweise einem Halteflansch der Granulierlochplatte, ein elastisches Dichtmaterial angeordnet ist.

Beim Granulieren von Kunststoffen tritt grundsätzlich die Problematik auf, dass im Granulierkopf und somit in den Durchtrittsöffnungen ein relativ hohes Temperaturniveau herrscht, um zuverlässig ein Erstarren der Kunststoffschmelze zu vermeiden, die Kunststoffschmelze jedoch unmittelbar nach Austritt aus den Durchtrittöffnungen stark abgekühlt werden muss, so dass sich ein starkes Temperaturgefälle zwischen dem Granulierkopf bzw. der Granulierlochplatte und der angrenzenden Schneidkammer ergibt. Insbesondere beim Anfahrprozess, bei dem - im Falle einer Unterwassergranulierung - ein durch die Schneidkammer geleiteter Wasserkreislauf zum Kühlen der Kunststoffschmelze bereits geschlossen sein muss, bevor Kunststoffschmelze aus der Granulierlochplatte austritt. Um ein Verklumpen des Granulats zu verhindern, ergibt sich, dass das Kühlwasser vor dem Austritt der Kunststoffschmelze mit der Oberfläche der Granulierlochplatte in Kontakt kommt und somit eine schockartige Abkühlung der Granulierlochplatte erfolgt. Dies kann zur Folge haben, dass die Kunststoffschmelze in einigen Löchern der Granulierlochplatte bzw. Durchtrittsöffnungen des Granulierkopfes bereits erstarrt und somit einzelne Löcher bzw. Durchtrittsöffnungen verschließt. Dies führt wiederum zu einem ungleichmäßigen Austreiben der Kunststoffschmelze aus den nicht verschlossenen Durchtrittsöffnungen bzw. Löchern, was zu einem ungleichmäßigen Granulat führt. Der Anfahrprozess muss dann gestoppt und erneut gestartet werden. Des Weiteren ergibt sich durch das Verlegen einiger Durchtrittsöffnungen bzw. Löcher aufgrund der notwendigen Überwindung der erstarrten Kunststoffschmelze in den erkalteten Durchtrittsöffnungen bzw. Löchern ein sehr hoher Druckaufbau vor der Granulierlochplatte, wobei für eine erhöhte Betriebssicherheit des Anfahrprozesses eine Schmelzpumpe erforderlich ist, die jedoch hohe Kosten verursacht.

Aus der US 3 516 120 A ist ein Granulierkopf bekannt, der Durchtrittsöffnungen aufweist, die in sich zu ihren Endbereichen konisch verjüngende stutzenförmige Auskleidungen münden. Um eine Wärmeübertragung von der mit der kalten Schneidkammer in Verbindung stehende Granulierlochplatte in das Innere der Durchtrittsöffnungen möglichst zu vermeiden und somit ein Erstarren der Kunststoffschmelze im Endbereich der Durchtrittsöffnungen zu verhindern, bestehen die Auskleidungen aus einem Material mit geringer Wärmeleitfähigkeit, insbesondere Quarzglas oder dergleichen. Während der Granulierung ergeben sich jedoch unterschiedliche Wärmeausdehnungen des im Betrieb erwärmten Granulierkopfs und der im Betrieb aufgrund des Kontakts mit dem Kühlwasser vergleichsweise kalten Granulierlochplatte, so dass aufgrund der unterschiedlichen Wärmeausdehnungen Verschiebungen zwischen Granulierkopf und Granulierlochplatte bewirkt werden, durch welche die Auskleidungen beschädigt werden. Es kann zwar ein Freiraum zwischen der Granulierlochplatte und der Auskleidung vorgesehen sein, doch liegt die vordere Stirnfläche der Auskleidung direkt an der Granulierlochplatte an, so dass sich auch hier aufgrund der unterschiedlichen Wärmeausdehnungen von Granulierkopf und Granulierlochplatte Verschiebungen zwischen Granulierlochplatte und der Auskleidung ergeben, wodurch die Auskleidung beschädigt wird.

Aus der US 4 120 625 A ist ein Granulierkopf mit einer Granulierlochplatte bekannt, bei dem ein sich zu einem freien Ende hin konisch verjüngender, ringförmiger Steg mit mehreren Durchtrittsöffnungen vorgesehen ist, der eine relativ große ringförmige Stirnfläche aufweist, die mit einem rotierenden Schneidmesser bzw. der kalten Umgebung in einer an die Granulierlochplatte angrenzenden Schneidkammer in Berührung kommt, so dass die Gefahr eines Erstarrens der Kunststoffschmelze in dem Durchtrittskanal gegeben ist. Zudem liegt die Granulierlochplatte mit einem Steg direkt am vorderen Ende des ringförmigen Steges auf, so dass aufgrund der unvermeidbaren unterschiedlichen Wärmeausdehnungen, die sich durch die unterschiedliche Erwärmung des Granulierkopfs und der Granulierlochplatte zwingend ergeben, Verschiebungen zwischen dem ringförmigen Steg des Granulierkopfs und der Granulierlochplatte auftreten. Derartige Verschiebungen führen dazu, dass die direkte Auflage der Granulierlochplatte am ringförmigen Steg nicht mehr gegeben ist und somit ein störungsfreier Betrieb der Anordnung nicht möglich ist.

Nach der US 4 564 350 A ist die Granulierlochplatte über eine Isolierschicht mit einem dem Granulierkopf zugeordneten Ringkörper verbunden, der hülsenförmige Einsätze zur Führung der Kunststoffschrrtelze aufweist. Diese Einsätze greifen durch die anliegende Isolierschicht hindurch formschlüssig in Ausnehmungen der Granulierlochplatte ein, so daß mit Zwangskräften auf die Einsätze bei unterschiedlichen Wärmebelastungen des Granulierkopfes und der Granulierlochplatte gerechnet werden muß.

In der US 4 678 423 A wird vorgeschlagen, zwischen dem Granulierkopf und einer diesem Granulierkopf stirnseitig vorgelagerten Granulierlochplatte 2 eine Isolierschicht vorzusehen, die aus Kunststoff oder einem gasförmigen Medium bestehen kann. Die über den Granulierkopf hinausragenden, stutzenförmigen Vorsprünge zur Führung der Kunststoffschmelze greifen in Löcher der Granulierlochplatte ein, deren Querschnitt größer als der Außenumfang der Vorsprünge ist. Bei einer Kunststoffisolierung sind die sich düsenartig verjüngenden Enden der stutzenartigen Vorsprünge formschlüssig in den Löchern der Granulierlochplatte festgelegt, so daß Zwangskräfte auf die stutzenartigen Vorsprünge unvermeidbar sind, wenn sich zwischen dem Granulierkopf und der Granulierlochplatte unterschiedliche Wärmedehnungen ergeben. Solche Zwangkräfte werden bei einer Isolierschicht aus einem gasförmigen Medium vermieden, doch besteht dann die Gefahr, daß die düsenartigen Enden der stutzenartigen Vorsprünge unterkühlt werden und die Kunststoffschmelze vorzeitig erstarrt.

Damit hülsenförmige Führungen für die Kunststoffschmelze bei einer Verstopfung einfach ausgetauscht werden können, ist es aus der US 3 792 950 A bekannt, diese Hülsen zwischen zwei stirnseitigen Dichtungen axial einzuspannen, und zwar mit Hilfe eines in die Granulierlochplatte eingeschraubten Verschlußstopfens, der das austrittsseitige Hülsenende formschlüssig aufnimmt und eine Austrittsdüse für die Kunststoffschmelze bildet. Damit ist eine Zwangsführung für die einerseits im Granulierkopf und anderseits in der Granulierlochplatte eingespannte Hülse mit den Nachteilen von Zwangskräften gegeben.

Schließlich ist es aus der FR 1 510 391 A bekannt, an der vorderen Stirnfläche eines Granulierkopfes einer Anordnung zur Unterwassergranulierung Strahldüsen einzuschrauben und zwischen der vorderen Stirnfläche der Strahldüsen und der Granulierlochplatte Dichtringe anzuordnen, die von Stützelementen der Granulierlochplatte gehalten werden. Durch das Vorsehen der Dichtringe können unvermeidbare Verschiebungen zwischen den Strahldüsen und der Granulierlochplatte über die Dichtringe aufgenommen bzw. ausgeglichen werden. Nachteilig ist allerdings, dass der Kontakt der Dichtringe mit der heißen, durch die Strahldüsen durchtretenden Kunststoffschmelze nicht vermieden werden kann.

Aufgabe der Erfindung ist es daher, eine Anordnung der eingangs angeführten Art zu schaffen, mit der ein Erstarren der Kunstoffschmelze in den Durchtrittsöffnungen des Granulierkopfes bzw. in den Öffnungen in der Granulierlochplatte zuverlässig verhindert und auch bei unterschiedlichen Wärmeausdehnungen von Granulierkopf und Granulierlochplatte ein störungsfreier Betrieb gewährleistet werden kann.

Die Erfindung löst die gestellte Aufgabe dadurch, dass die stutzenförmigen Vorsprünge jeweils an ihrer die Durchtrittsöffnung begrenzenden Innenseite einen über ihre Stirnfläche hinausragenden Steg aufweisen.

Durch den über die Stirnflächen der stützenförmigen Vorsprünge hinausragenden Steg, der vom jeweiligen Dichtmaterial umschlossen..wird, kann in einfacher Weise eine Berührung des Dichtmaterials mit der heißen Kunststoffschmelze unterbunden werden, ohne den Betrieb aufgrund unterschiedlicher Wärmeausdehnungen zwischen der Granulierlochplatte und den stützenförmigen Vorsprüngen zu gefährden, weil dadurch bedingte Verschiebungen über den Freiraum zwischen den stutzenförmigen Vorsprüngen und den Löchern der Granulierlochplatte sowie über die Elastizität des Dichtmaterials aufgenommen werden können.

Wenn der Außenumfang und die Länge des Stegs derart gewählt ist, dass sich der frei auskragende Steg berührungsfrei zumindest bis zu einer innerhalb des Halteflanschs ausgebildeten Austrittsöffnung des Lochs der Granulierlochplatte erstreckt, kann auch im Falle einer Verlegung der Austrittsöffnung der Granulierlochplatte zuverlässig verhindert werden, dass rückstauende Kunststoffschmelze in den Freiraum zwischen dem stutzenförmigen Vorsprung und dem Loch der Granulierlochplatte eintritt und das Dichtmaterial beschädigt wird.

Um eine Wärmeübertragung zwischen der an die Granulierlochplatte anschließenden Schneidkammer, in welcher insbesondere im Fall einer Unterwassergranulierung Kühlwasser aufgenommen ist, und den stutzenförmigen Vorsprüngen möglichst gering zu halten, ist von Vorteil, wenn der Steg zumindest in seinem vorderen Endbereich eine Dicke von höchstens 0,05 bis 0,5 mm, inbesondere 0,1 bis 0,15 mm, aufweist.

Ebenso ist es günstig, wenn die stutzenförmigen Vorsprünge sich zu ihren freien Enden hin im Querschnitt verjüngen, da somit eine vergleichsweise geringe Angriffsfläche in Richtung der während des Betriebs vergleichsweise kalten Granulierlochplatte gegeben ist, wodurch wiederum ein Wärme- bzw. Kälteübergang gering gehalten werden kann.

Da insbesondere mit einer stetigen Querschnittsverjüngung der stutzenförmigen Vorsprünge und einer entsprechenden Ausgestaltung der Granulierlochplatte eine konstruktiv einfach herzustellende Ausgestaltung gegeben ist, ist es von Vorteil, wenn die Löcher und die Vorsprünge sich zumindest teilweise konisch verjüngen.

Wenn als Dichtmaterial eine perfluorierte Verbindung, insbesondere ein Perflour-Elastomer (FFKM), oder ein ähnlich elastisches Dichtmaterial vorgesehen ist, ist die erforderliche Elastizität des Dichtmaterials gegeben und zudem weisen perfluorierte Verbindungen eine relativ hohe Temperaturbeständigkeit sowie eine schlechte Wärmeleitfähigkeit auf. Demzufolge ist zuverlässig eine lange Lebensdauer des Dichtmaterials und zugleich eine schlechte Wärmeübertragung zwischen Granulierlochplatte und den stutzenförmigen Vorsprüngen gewährleistet.

Um die in radialer Richtung der Granulierlochplatte auftretenden Verschiebungen zwischen stutzenförmigen Vorsprüngen und Granulierlochplatte aufzunehmen bzw. auszugleichen, haben Tests gezeigt, dass es insbesondere von Vorteil ist, wenn als Dichmaterial ein 0-Ring vorgesehen ist.

Wenn als stutzenförmige Vorsprünge gesonderte Einsätze in den Durchtrittsöffnungen vorgesehen sind, können bei ein- und demselben Granulierkopf verschiedene Einsätze verwendet werden, so dass Einsätze aus verschiedenen Materialien bzw. mit unterschiedlich großen Durchtrittsöffnungen je nach Art des gewünschten Granulats eingesetzt werden können. Grundsätzlich sind für die gesonderten Einsätze Materialien mit einer relativ guten Wärmeleitfähigkeit zu wählen, da die Einsätze über die Beheizung des Granulierkopfes ebenfalls möglichst erwärmt werden sollen, so dass ein Erstarren der Kunststoffschmelze bereits in den Durchtrittsöffnungen der Einsätze zuverlässig verhindert wird. Die thermische Isolierung zwischen den stutzenförmigen Vorsprüngen und der Granulierlochplatte erfolgt vielmehr über den Freiraum zwischen stutzenförmigen Vorsprüngen und Granulierlochplatte bzw. das zumindest an der Stirnseite vorgesehene Dichtmaterial. Selbstverständlich können die stutzenförmigen Vorsprünge jedoch auch einstöckig mit dem Granulierkopf ausgebildet sein.

Tests haben gezeigt, dass ein Wärmeübertritt von der kalten Schneidkammer auf den gewärmten Granulierkopf insbesondere vermieden werden kann, wenn eine Granulierlochplatte scheibenförmig ist, da somit ein Hohlraum zwischen der scheibenförmigen Granulierlochplatte und dem Granulierkopf vorgesehen werden kann, welcher eine sehr gute thermische Isolierwirkung aufweist.

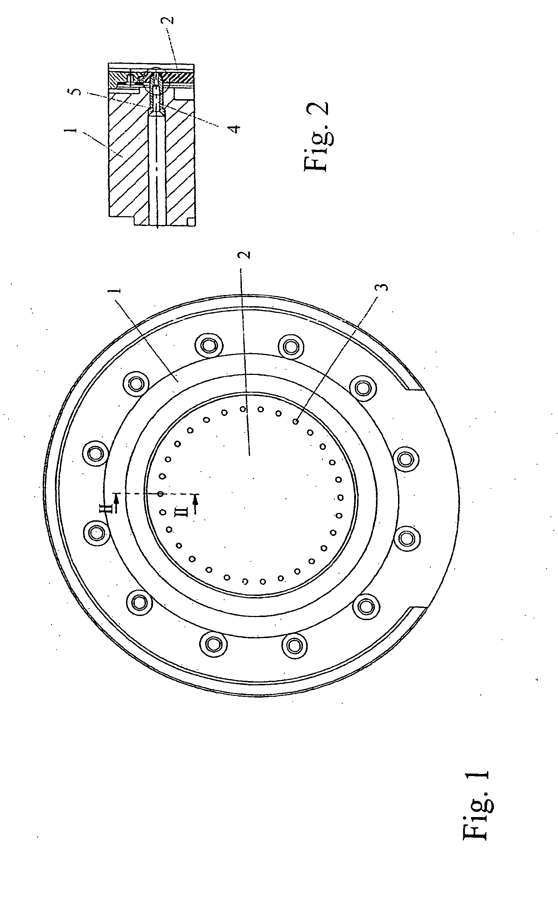

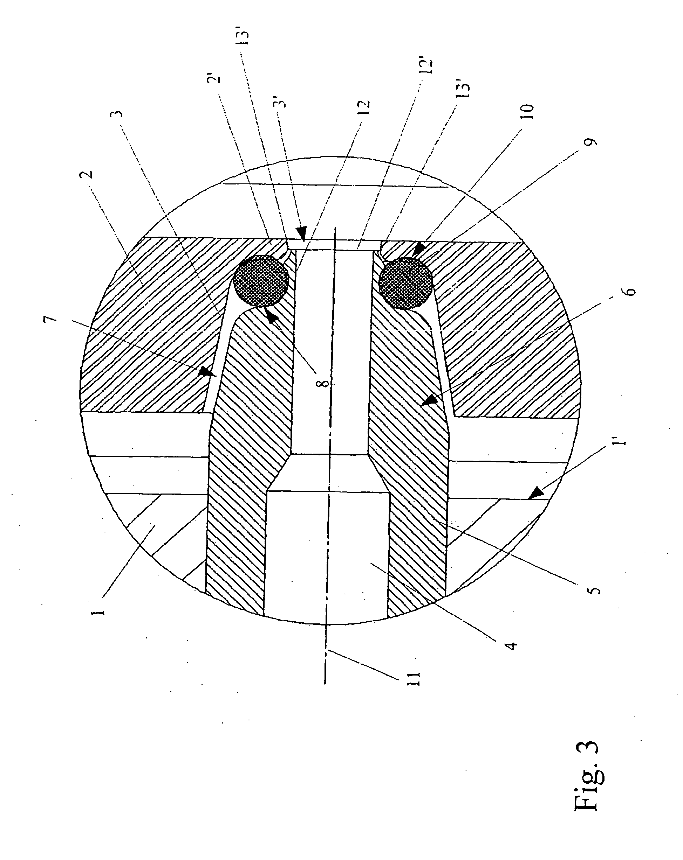

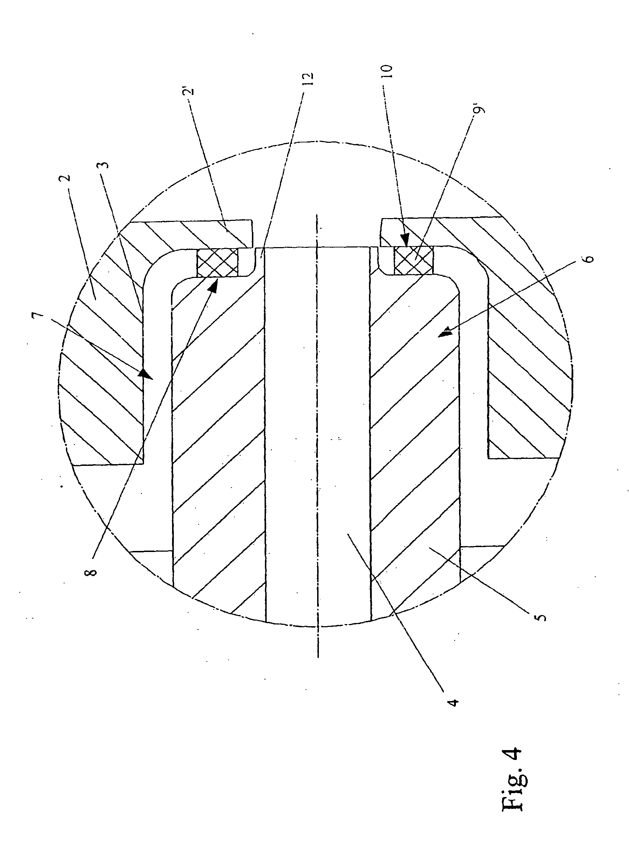

Die Erfindung wird nachstehend anhand von in der Zeichnung dargestellten bevorzugten Ausführungsbeispielen, auf die sie jedoch nicht beschränkt sein soll, noch weiter erläutert. Im Einzelnen zeigen in der Zeichnung: Fig. 1 eine Ansicht des Granulierkopfes mit einer scheibenförmigen Granulierlochplatte; Fig. 2 einen Schnitt gemäß der Linie II-II in Fig. 1; Fig. 3 eine Detailansicht der Anordnung eines stutzenförmigen Vorsprungs in einem Loch der Granulierlochplatte gemäß Fig. 2; und Fig. 4 eine weitere Detailansicht eines Ausführungsbeispiels mit einem zylindrischen stutzenförmigen Vorsprung.

In Fig. 1 ist ein Granulierkopf 1 gezeigt, auf dem eine scheibenförmige Granulierlochplatte 2 mit einer Vielzahl von entlang eines Kreisumfanges verteilten Löchern 3 zum Austritt von zu granulierender Kunststoffschmelze angeordnet ist. Zur Granulierung der aus den Löchern 3 austretenden Kunststoffschmelze rotiert ein auf der Granulierlochplatte 2 anliegender (nicht gezeigter) Messerkopf mit Schneidmessern, wobei dieser insbesondere im Fall einer Unterwassergranulierung in einer mit Kühlwasser gefüllten Schneidkammer angeordnet ist, so dass während des Granulierens die in Fig. 1 gezeigte Stirnfläche der Anordnung einer kalten Umgebung ausgesetzt ist.

In den Figuren 2 und 3 ist im Schnitt eine Durchtrittsöffnung 4 für den zu granulierenden Kunststoff ersichtlich, wobei dieser in einem in den Granulierkopf 1 eingesetzten Einsatz 5 mündet, der einen über die vordere Stirnfläche 1' des Granulierkopfs 1 stutzenförmig hinausragenden Vorsprung 6 aufweist. Dieser Vorsprung 6 ist in einem Loch 3 der Granulierlochplatte 2 aufgenommen, wobei der freie Querschnitt des Lochs 3 größer ist als der Außendurchmesser des Vorsprungs 6, so dass ein Freiraum 7 zwischen dem Vorsprung 6 und der Granulierlochplatte 2 verbleibt.

Um den Freiraum 7, welcher als thermische Isolierung zwischen der im Betrieb vergleichsweise kühlen Granulierlochplatte 2 und dem über den Granulierkopf 1 beheizten Einsatz 5 vorgesehen ist, gegen einen Eintritt von Kühlflüssigkeit aus einer angrenzenden Schneidkammer bzw. auch gegen den Eintritt von Kunststoffschmelze abzudichten, ist an einer vorderen Stirnfläche 8 des stutzenförmigen Vorsprungs 6 ein 0-Ring 9 als Dichtmaterial 10 angeordnet. Der 0-Ring 9 kann hierbei beispielsweise aus einem Perflour-Elastomer FFKM 615, wie dieser von der Fa. Greene, Tweed & Co unter der Bezeichnung CHEMRAZ® erhältlich ist, oder einem ähnlich elastischen Material bestehen, um Verschiebungen augrund der unterschiedlichen Wärmeausdehnungen des Vorsprungs 6 bzw. des Granulierkopfs 1 und der Granulierlochplatte 2, welche insbesondere senkrecht zu einer Längsachse 11 der Durchtrittsöffnungen 4 auftreten, aufzunehmen bzw. auszugleichen. Zugleich weist das elastische Dichtmaterial 10 eine schlechte Wärmeleitfähigkeit auf, so dass sie auch zur Isolierung zwischen der vergleichsweise kühlen Granulierlochplatte 2 und dem vergleichsweise warmen Vorsprung 6 vorgesehen ist. Um den 0-Ring 9 zuverlässig zwischen der Stirnfläche 8 des stutzenförmigen Vorsprungs 6 und der Granulierlochplatte 2 aufnehmen zu können, weist die Granulierlochplatte 2 einen Halteflansch 2' auf, der mittels einer Durchmesserreduzierung des Durchmessers des Lochs 3 auf eine Durchmesser-kleinere Austrittsöffnung 3'erzielt wird. Selbstverständlich kann jedoch das Dichtmaterial 10 eine andere Form aufweisen, wobei sich insbesondere das Dichtmaterial 10 auch über einen beliebigen Abschnitt in den Freiraum 7 hinein erstrecken kann.

Wie insbesondere aus Fig. 3 ersichtlich, weist der Vorsprung 6 an seiner die Durchtrittsöffnung 4 begrenzenden Innenseite einen über die vorderen Stirnfläche 8 hinausragenden Steg 12 auf, der so ausgelegt ist, dass ein vorderes Ende 12' berührungsfrei innerhalb der Austrittsöffnung 3' des Lochs 3 angeordnet ist. Hierdurch kann bei einem. Verlegen der Austrittsöffnung 3' verhindert werden, dass rückstauende Kunststoffschmelze in den Freiraum 7 zwischen der Granulierlochplatte 2 und dem Vorsprung 6 eindringt und das Dichtmaterial 10 beschädigt wird. Darüber hinaus weist der Steg 12 an seinem vorderen Ende 12' lediglich eine Materialstärke von ca. 0,1 bis 0,15 mm auf, so dass im Wesentlichen keine Angriffsfläche zum Einleiten von Kälte in den stutzenförmigen Vorsprung 6 von Richtung der Schneidkammer gegeben ist.

Wie weiters aus Fig. 3 ersichtlich ist, ist der stutzenförmige Vorsprung 6 exzentrisch zum Loch 3 bzw. dessen Austrittsöffnung 3' angeordnet, so dass sich wie in Fig. 3 gezeigt bei Raumtemperatur in der Schnittdarstellung radial außen im Vergleich zu einem radial innenliegenden Spalt 13 ein geringfügig größerer Spalt 13 zwischen dem Steg 12 und dem Halteflansch 2' ergibt. Der radial außenliegende Spalt 13 weist eine Breite von ca. 0,01 mm auf, welches zum Ausgleich der Verschiebungen zwischen der Granulierlochplatte 2 und dem Vorsprung 6 während des Granulierbetriebs ausreichend ist. Der radial außenliegende Spalt 13 ist somit bei Raumtemperatur ein wenig größer gewählt als der radial innenliegende Spalt 43', da sich durch den Kontakt mit der kühlen Umgebung in der Schneidkammer die Granulierlochplatte 2 zusammenzieht, wodurch primär eine Annäherung des radial außenliegenden Teils des Halteflansch 2 ' an den Vorsprung 6 und so eine Verkleinerung des Spalts 13 während des Betriebs bewirkt wird. Wesentlich ist hierbei jedoch lediglich, dass die Verschiebungen über das elastische Isolier- und Dichtmaterial 10 aufgenommen werden können. Durch die Verschiebungen kann somit schlechtesten Falls der Halteflansch 2' mit dem Steg 12 in Berührung gelangen, ohne diesen jedoch zu beschädigen.

In Fig. 4 ist ein alternatives Ausführungsbeispiel gezeigt, wobei hier der Vorsprung 6 zylindrisch und nicht wie in Fig. 3 geringfügig konisch ausgebildet ist. Ebenso wie in Fig. 3 ist jedenfalls ein elastisches Isolier und Dichtmaterial 10 an der Stirnfläche 8 des Vorsprungs 6 angeordnet und ein Freiraum 7 zwischen dem Vorsprung 6 und der Granulierlochplatte 2 vorgesehen, so dass Verschiebungen aufgrund unterschiedlicher Wärmeausdehnungen der Granulierlochplatte 2 und des Einsatzes 5 bzw. des Granulierkopfs 1 über das elastische Dichtmaterial 10, das beispielsweise aus Perflour-Elastomer FFKM 615 bestehen kann, aufgenommen werden können. Zudem ist ersichtlich, dass als Dichtmaterial 10 hier anstelle des 0-Rings 9 eine flacher Dichtring 9' vorgesehen ist.

## Patentansprüche

1. Anordnung mit einem Granulierkopf (1) eines Extruders zum Granulieren von Kunststoffen mit mehreren Durchtrittsöffnungen (4) zum Durchtritt von Kunststoffschmelze und einer an seiner Stirnfläche (1') angeordneten Granulierlochplatte (2) mit Löchern (3) , wobei die Durchtrittsöffnungen (4) in je einem gesonderten, über eine vordere Stirnfläche (1') des Granulierkopfes (1) hinausragenden stutzenförmigen Vorsprung (6) münden, wobei zur berührungsfreien Aufnahme der stutzenförmigen Vorsprünge (6) in den Löchern (3) der Granulieriochplatte (2) unter Ausbildung eines Freiraums (7) der freie Querschnitt der Löcher (3) größer als der Außenumfang der Vorsprünge (6) ist, und jeweils zwischen einer vorderen Stirnfläche (8) des stutzenförmigen Vorsprungs (6) und einem mit der Granulierlochplatte (2) verbundenen Stützelement, vorzugsweise einem Halteflansch (2') der Granulierlochplatte (2), ein elastisches Dichtmaterial (10) angeordnet ist, **dadurch gekennzeichnet, dass** die stutzenförmigen Vorsprünge (6) jeweils an ihrer die Durchtrittsöffnung (4) begrenzenden Innenseite einen über ihre Stirnfläche (8) hinausragenden Steg (12) aufweisen.

2. Anordnung nach Anspruch 1, **dadurch gekennzeichnet, dass** der Außenumfang und die Länge des Stegs (12) derart gewählt sind, dass sich der frei auskragende Steg (12) berührungsfrei zumindest bis zu einer innerhalb des Halteflanschs (2') ausgebildeten Austrittsöffnung (3') des Lochs (3) der Granulierlochplatte (2) erstreckt.

3. Anordnung nach Anspruch 1 oder 2, **dadurch gekennzeichnet, dass** der Steg (12) zumindest in seinem vorderen Endbereich eine Dicke von höchstens 0,05 bis 0,5 mm, inbesondere 0,1 bis 0,15 mm, aufweist.

4. Anordnung nach einem der Ansprüche 1 bis 3, **dadurch gekennzeichnet, dass** die stutzenförmigen Vorsprünge (6) sich zu ihren freien Enden hin im Querschnitt verjüngen.

5. Anordnung nach Anspruch 4, **dadurch gekennzeichnet, dass** sich die Löcher (3) und die Vorsprünge (6) zumindest teilweise konisch verjüngen.

6. Anordnung nach einem der Ansprüche 1 bis 5, **dadurch gekennzeichnet dass** als Dichtmaterial (10) eine perfluorierte Verbindung, insbesondere ein Perfluor-Elastomer (FFKM), oder ein ähnlich elastisches Dichtmaterial vorgesehen ist.

7. Anordnung nach einem der Ansprüche 1 bis 6, **dadurch gekennzeichnet, dass** als Dichtmaterial (10) ein 0-Ring vorgesehen ist.

8. Anordnung nach einem der Ansprüche 1 bis 7, **dadurch gekennzeichnet, dass** als stutzenförmige Vorsprünge (6) gesonderte Einsätze (5) in den Durchtrittsöffnungen (4) vorgesehen sind.

9. Anordnung nach einem der Ansprüche 1 bis 8, **dadurch gekennzeichnet, dass** die Granulierlochplatte (2) scheibenförmig ist.

## Claims

1. Arrangement having a granulating head (1) of an extruder for granulating synthetic materials having several through-going openings (4) for the passage of synthetic material melt and a granulating perforated plate (2) having holes (3) disposed on the end surface (1') of the granulating head, wherein the through-going openings (4) each open in a separate lug-like protrusion (6) projecting over a front end surface (1') of the granulating head (1), wherein in order to accommodate the lug-like protrusions (6) in the holes (3) of the granulating perforated plate (2) in a contact-free manner leaving a free space (7), the free cross-section of the holes (3) is greater than the outer periphery of the protrusions (6), and a resilient sealing material (10) is disposed in each case between a front end surface (8) of the lug-like protrusion (6) and a support element connected to the granulating perforated plate (2), preferably a holding flange (2') of the granulating perforated plate (2), **characterised in that** the lug-like protrusions (6) in each case comprise on their inner side delimiting the through-going opening (4) a web (12) protruding over its end surface (8).

2. Arrangement as claimed in Claim 1, **characterised in that** the outer periphery and the length of the web (12) are selected such that the freely protruding web (12) extends in a contact-free manner at least as far as an outlet opening (3') of the hole (3) of the granulating perforated plate (2), which outlet opening is formed within the holding flange (2').

3. Arrangement as claimed in Claim 1 or 2, **characterised in that** the web (12) at least in its front end region has a thickness of at most 0.05 to 0.5 mm, in particular 0.1 to 0.15 mm.

4. Arrangement as claimed in any one of Claims 1 to 3, **characterised in that** the lug-like protrusions (6) taper in cross-section towards their free ends.

5. Arrangement as claimed in Claim 4, **characterised in that** the holes (3) and the protrusions (6) taper conically at least partially.

6. Arrangement as claimed in any one of Claims 1 to 5, **characterised in that** a perfluorinated compound, in particular a perfluoroelastomer (FFKM), or a similarly resilient sealing material is provided as the sealing material (10).

7. Arrangement as claimed in any one of Claims 1 to 6, **characterised in that** an O-ring is provided as the sealing material (10).

8. Arrangement as claimed in any one of Claims 1 to 7, **characterised in that** separate inserts (5) in the through-going openings (4) are provided as the lug-like protrusions (6).

9. Arrangement as claimed in any one of Claims 1 to 8, **characterised in that** the granulating perforated plate (2) is disk-shaped.

## Revendications

1. Dispositif avec une tête de granulation (1) d'une extrudeuse, pour la granulation de matières synthétique, comprenant plusieurs ouvertures de passage (4) pour le passage d'une masse fondue de matière synthétique et une plaque perforée de granulation (2) disposée sur sa face frontale, munie de trous (3), les ouvertures de passage (4) débouchant chacune dans une saillie (6) en forme de tubulure, séparée, sortant d'une face frontale avant (1') de la tête de granulation (1), sachant que, pour assurer un logement sans contact des saillies (6) en forme de tubulure dans les trous (3) de la plaque perforée de granulation (2), en constituant un espace libre (7), la section transversale libre des trous (3) est plus grande que la périphérie extérieure des saillies (6) et, chaque fois, un matériau d'étanchéité (10) élastique est disposé entre une face frontale avant (8) de la saillie (6) en forme de tubulure et un élément d'appui relié à la plaque perforée de granulation (2), de préférence une bride de maintien (2') de la plaque perforée de granulation (2), **caractérisé en ce que** les saillies (6) en forme de tubulure présentent chacune, sur la face intérieure délimitant l'ouverture de passage (4), une nervure (12) sortant de sa face frontale (8).

2. Dispositif selon la revendication 1, **caractérisé en ce que** la périphérie extérieure et la longueur de la nervure (12) sont choisies telles que la nervure (12) en saillie librement s'étend sans contact au moins jusqu'à une ouverture de sortie (3'), réalisée à l'intérieur de la bride de maintien (2'), du trou (3) de la plaque perforée de granulation (2).

3. Dispositif selon la revendication 1 ou 2, **caractérisé en ce que** la nervure (12) présente, au moins dans sa zone d'extrémité avant, une épaisseur maximale de 0,05 à 0,5 mm, en particulier de 0,1 à 0,15 mm.

4. Dispositif selon l'une quelconque des revendications 1 à 3, **caractérisé en ce que** les saillies (6) en forme de tubulure ont une section transversale allant en s'effilant, en évoluant vers leurs extrémités libres.

5. Dispositif selon la revendication 4, **caractérisé en ce que** les trous (3) et les saillies (6) vont en s'effilant de manière au moins partiellement conique.

6. Dispositif selon l'une quelconque des revendications 1 à 5, **caractérisé en ce qu'**est prévu comme matériau d'étanchéité (10) un composé perfluoré, en particulier un perfluoroélastomère (FFKM), ou un matériau d'étanchéité élastique analogue.

7. Dispositif selon l'une quelconque des revendications 1 à 6, **caractérisé en ce qu'**un élément torique est prévu comme matériau d'étanchéité (10).

8. Dispositif selon l'une quelconque des revendications 1 à 7, **caractérisé en ce que** des inserts (5) séparés sont prévus, en tant que saillies (6) en forme de tubulure, dans les ouvertures de passage (4).

9. Dispositif selon l'une quelconque des revendications 1 à 8, **caractérisé en ce que** la plaque perforée de granulation (2) est discoïde.
